# FASCICULE DE BREVET EUROPEEN

(11) **EP 3 214 364 B1**
(45) Date de publication et mention de la délivrance du brevet: **11.05.2022**
(21) Numéro de dépôt: 17158768.6
(22) Date de dépôt: 01.03.2017
(51) Int. Cl.: F21S 41/148, F21S 41/255, F21S 41/275, F21W 102/16

(54) **LENTILLE AMELIOREE POUR DISPOSITIF D'ECLAIRAGE DE VEHICULE AUTOMOBILE**
VERBESSERTE LINSE FÜR BELEUCHTUNGSVORRICHTUNG EINES KRAFTFAHRZEUGS
IMPROVED LENS FOR A LIGHTING DEVICE OF A MOTOR VEHICLE

(30) Priorité: 02.03.2016 FR 1651753
(43) Date de publication de la demande: 06.09.2017
(73) Titulaire: Valeo Vision, 93012 Bobigny Cedex (FR)
(72) Inventeur: PELLARIN, Marie, 92400 Courbevoie (FR); BOURDIN, David, 93190 Livry Gargan (FR); ANDRE, Stephane, 93220 Gagny (FR)
(74) Mandataire: Valeo Visibility

(56) Documents cités:
- EP-A2- 0 221 416
- EP-A2- 2 578 929
- WO-A1-2013/104785
- WO-A1-2013/120121
- WO-A1-2014/208655
- FR-A1- 2 819 040
- FR-A1- 2 925 656
- FR-A1- 2 931 251
- JP-A- 2013 093 105
- US-A1- 2010 172 146

## Description

L'invention se rapporte au domaine des lentilles pour dispositif d'éclairage de véhicule automobile, et en particulier pour les dispositifs d'éclairage adaptés pour assurer les fonctions de feux de croisement et de feux de route.

Ce type de dispositifs comprend souvent deux sources de lumière respectivement associées à l'une de ces fonctions, l'une des sources de lumière étant par exemple allumée lors de la mise en œuvre de la fonction feux de croisement, les deux l'étant lors de la mise en œuvre de la fonction feux de route. Un tel dispositif est montré dans le document WO2013/120121 A1.

Généralement, ce type de dispositifs comprend en outre un élément, telle qu'une plieuse ou un masque, configuré pour générer une ligne de coupure au sein du faisceau lumineux généré par le dispositif, notamment lors de la mise en œuvre de la fonction de feux de croisement. La configuration de la ligne de coupure est prescrite par des réglementations, qui imposent par exemple que la ligne de coupure forme une démarcation au gradient de lumière donné entre la zone de l'espace éclairée et la zone sombre qui la surplombe.

L'un des inconvénients dans les dispositifs d'éclairage actuels réside dans le fait que lors de la mise en œuvre de la fonction de feux de route, la coupure en question demeure nettement marquée et forme une bande sombre entre les faisceaux de feux de route et de feux de croisement. Or cette démarcation nette entre les deux faisceaux est de nature à perturber la vision du conducteur.

L'invention vient améliorer la situation. Pour cela, l'invention fait appel à des microstructures sur la surface de la lentille. De telles microstructures sont connues par exemple du document FR2931251 A1.

A cet effet, l'invention concerne une lentille pour dispositif d'éclairage de véhicule automobile, la lentille comprenant une face arrière destinée à être orientée en direction d'une source de lumière du dispositif d'éclairage, et une face avant destinée à être orientée vers une chaussée à éclairer, la lentille présentant un plan médian vertical destiné à être sensiblement orthogonal à la chaussée, la face avant présentant une première zone de diffusion présentant des microstructures adaptées pour diffuser la lumière émise par la source de lumière, la première zone de diffusion s'étendant selon le plan médian vertical, la face avant comprenant en outre au moins deux deuxièmes zones de diffusion présentant chacune des microstructures adaptées pour diffuser la lumière émise par la source de lumière, les deux deuxièmes zones de diffusion se situant de part et d'autre du plan médian vertical. Une telle lentille est connue du document FR2925656 A1.

Selon l'invention, les microstructures des deuxièmes zones de diffusion présentent une profondeur strictement supérieure à la profondeur des microstructures de la première zone de diffusion.

Selon un aspect de l'invention, le rapport entre la profondeur des microstructures des deuxièmes zones de diffusion et la profondeur des microstructures de la première zone de diffusion est compris entre 1,5 et 3.

Selon un aspect de l'invention, la profondeur des microstructures de la première zone de diffusion est comprise entre 1,5 µm et 4 µm.

Selon un aspect de l'invention, la profondeur des microstructures des deuxièmes zones de diffusion est comprise entre 3 µm et 8 µm.

Selon un aspect de l'invention, la profondeur des microstructures d'une deuxième zone de diffusion est strictement supérieure à la profondeur des microstructures de l'autre deuxième zone de diffusion.

Selon un aspect de l'invention, au sein d'une zone de diffusion donnée, les microstructures présentent toutes sensiblement la même profondeur.

Selon un aspect de l'invention, les microstructures présentent un rayon maximal compris entre 0,5 mm et 1 mm.

Selon un aspect de l'invention, la première zone de diffusion présente une forme générale de bande s'étendant selon le plan médian vertical.

Selon un aspect de l'invention, la première zone de diffusion présente une forme générale circulaire.

Selon un aspect de l'invention, la première zone de diffusion présente une largeur comprise entre 20% et 60% d'un diamètre de la lentille.

Selon un aspect de l'invention, la face avant comprend une troisième zone de diffusion s'étendant sensiblement orthogonalement au plan médian, la troisième zone de diffusion s'étendant à partir d'une extrémité inférieure des première et deuxièmes zones de diffusion en direction d'une extrémité de la face avant de la lentille.

Selon un aspect de l'invention, la troisième zone de diffusion présente des microstructures adaptées pour diffuser la lumière émise par la source de lumière, les microstructures de la troisième zone présentant une profondeur sensiblement identique à la profondeur des microstructures de la première zone de diffusion.

Selon un aspect de l'invention, la première et la troisième zones de diffusion définissent conjointement sur la face avant de la lentille une région de diffusion connexe.

Selon un aspect de l'invention, la face avant présente, au niveau d'une extrémité inférieure, une région conformée pour dévier une partie de la lumière issue de la source de lumière pour l'éclairage de points de portique.

L'invention concerne en outre un dispositif d'éclairage, notamment de véhicule automobile, caractérisé en ce qu'il comprend au moins une source de lumière configurée pour émettre de la lumière et une lentille selon l'une quelconque des revendications précédentes agencée pour recevoir au moins une partie de la lumière émise par la source de lumière.

Selon un aspect de l'invention, le dispositif d'éclairage comprend une première source de lumière associée à une fonction de feu de croisement du dispositif d'éclairage, une deuxième source de lumière associée à une fonction de feu de route du dispositif d'éclairage, et un élément de coupure adapté pour générer une ligne de coupure au sein d'un faisceau lumineux émis par le dispositif d'éclairage.

L'invention sera mieux comprise à la lecture de la description détaillée qui va suivre, donnée uniquement à titre d'exemple, et faite en référence aux Figures annexées, sur lesquelles :
- La Figure 1 est une illustration schématique d'un dispositif d'éclairage selon l'invention ;
- Les Figures 2a et 2b illustrent les faisceaux lumineux produits par le dispositif de la Figure 1 lors de la mise en œuvre de l'une et l'autre de deux fonctions du dispositif de la Figure 1 ;
- la Figure 3 est une vue de face d'une lentille selon l'invention ; et
- la Figure 4 illustre une vue en coupe de microstructures de la lentille de la Figure 3.

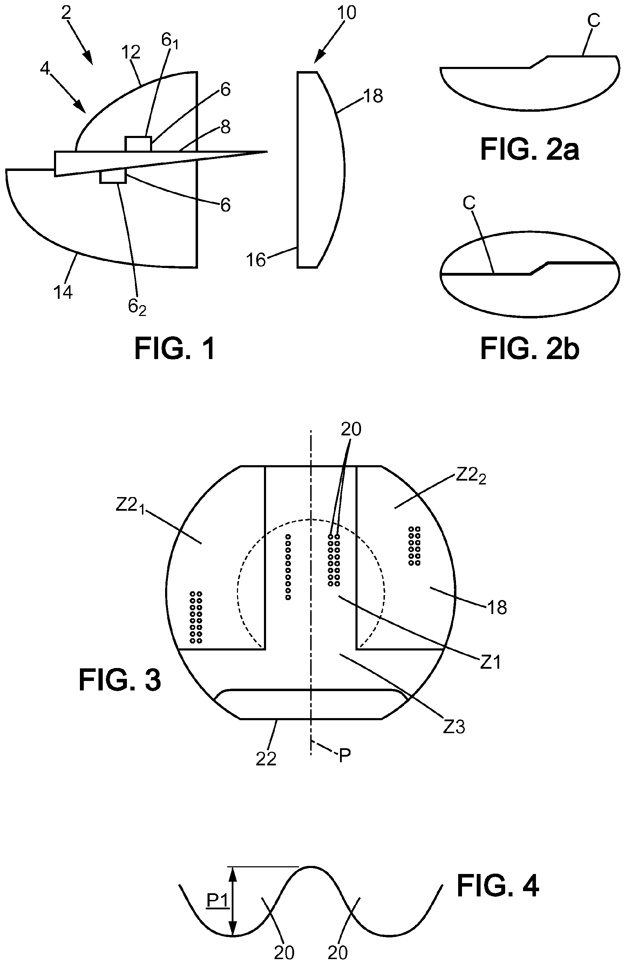

La Figure 1 illustre un dispositif d'éclairage 2 selon l'invention, ci-après dispositif 2.

Dans le contexte de l'invention, le dispositif 2 est avantageusement un dispositif d'éclairage de véhicule automobile, c'est-à-dire qu'il est destiné à être intégré à un véhicule automobile.

En outre, le dispositif 2 est avantageusement un projecteur avant, c'est-à-dire un phare avant.

Avantageusement, le dispositif 2 est adapté pour la mise en œuvre de deux fonctions d'éclairage distinctes :
- une fonction de feux de croisement, dite fonction « code », et
- une fonction de feux de route, dite fonction « route ».

Le faisceau lumineux généré par le dispositif 2 lors de la mise en œuvre de la fonction « code » est illustré en Figure 2a. Il présente, dans sa partie haute, une coupure C qui démarque la zone éclairée par le faisceau et située en dessous de la coupure C, de la zone non éclairée et sombre qui la surplombe.

Par exemple, la coupure présente une première portion rectiligne dans sa partie gauche et une deuxième portion rectiligne dans sa partie droite. La deuxième portion rectiligne est par exemple située à une hauteur différente de la première portion. Ces deux portions sont séparées par une portion intermédiaire inclinée.

Le faisceau lumineux généré par le dispositif 2 lors de la mise en œuvre de la fonction « route » est illustré sur la Figure 2b. Le faisceau présente sensiblement la même configuration qu'en Figure 2a en partie basse, et présente en outre une zone éclairée au-dessus de la coupure C, qui sépare alors les deux zones éclairées.

De nouveau en référence à la Figure 1, le dispositif 2 comprend un boîtier 4, au moins une source de lumière 6, un élément 8 configuré pour générer la coupure C, et une lentille 10 selon l'invention.

Le boîtier 4 est configuré pour héberger la ou les sources de lumière 6. Il est en outre configuré pour réfléchir la lumière émise par ces sources en direction de la lentille 10.

Le boîtier 4 comprend par exemple une partie supérieure 12 et une partie inférieure 14 respectivement associées à l'une au moins des deux fonctions du dispositif 2. Plus spécifiquement, la partie supérieure 12 est associée aux fonctions code et route, et la partie inférieure 14 est associée à la seule fonction route.

La partie supérieure 12 comprend par exemple une pluralité de demi-coquilles courbées rapportées les unes aux autres deux à deux au niveau d'arêtes latérales de ces dernières, et dont les concavités respectives sont tournées vers l'élément 8. Chaque coquille présente par exemple une forme de portion d'ellipsoïde.

Par exemple, la partie supérieure 12 comprend trois telles coquilles.

La partie inférieure 14 se présente par exemple sous la forme d'une coquille dont la concavité est tournée vers l'élément 8 et la partie supérieure 12 du boîtier 4. Elle présente par exemple une forme générale de portion d'ellipsoïde.

Alternativement, la partie inférieure 14 comprend une pluralité de telles coquilles rapportées les unes aux autres deux à deux au niveau d'arêtes latérales de ces dernières, et dont les concavités respectives sont tournées vers l'élément 8 et la partie supérieure 12.

La face interne des parties supérieure 12 et inférieure 14 est configurée pour réfléchir la lumière émise par la ou les sources de lumière 6.

La ou les sources de lumière 6 forment le cœur d'émission de lumière du dispositif 2.

Avantageusement, le dispositif 2 comprend deux sources de lumière 6 indépendantes l'une de l'autre.

Ainsi, le dispositif 2 comprend une première source de lumière 6₁ associée à la fonction code et à la fonction route, et une deuxième source de lumière 6₂ associée à la seule fonction route.

La source 6₁ est agencée dans le boîtier de façon à émettre de la lumière en direction de la face interne de la partie supérieure 12 du boîtier 4. Elle est par exemple agencée au niveau d'un foyer des coquilles de la partie supérieure 12. En pratique, elle est par exemple agencée au niveau de l'élément 8

La source 6₂ est agencée dans le boîtier de façon à émettre de la lumière en direction de la face interne de la partie inférieure du boîtier 4. Elle est par exemple agencée au niveau d'un foyer de la partie inférieure 14.

Les sources de lumière comprennent par exemple chacune un ou plusieurs éléments photoémissifs, tels que des diodes électroluminescentes optionnellement couplées à un matériau luminophore configuré pour convertir une partie de la lumière émise par ces éléments pour l'obtention d'une lumière résultante de couleur choisie. Cette lumière résultante est par exemple blanche.

L'élément 8 est configuré pour générer la coupure C dans le faisceau produit par le dispositif 2.

L'élément 8 comprend une portion formant une plieuse, c'est-à-dire un cache réfléchissant de forme choisie pour conférer à la coupure C la forme choisie. La portion formant la plieuse est par exemple agencée sensiblement horizontalement (au sens de l'orientation de la Figure 1). Elle se situe au niveau de l'extrémité avant de l'élément 8.

La plieuse présente par exemple une arête gauche destinée à former la première portion rectiligne de la coupure C, une arête droite décalée en hauteur par rapport à l'arête gauche et destinée à former la deuxième portion rectiligne de la coupure C, et une arête intermédiaire inclinée destinée à former la portion intermédiaire inclinée de la coupure C.

L'élément 8 comprend en outre une portion formant un support pour la ou les sources de lumière 6. Comme illustré en Figure 1, cette portion se situe à l'arrière de l'élément 8, par opposition à la portion formant la plieuse qui se situe à l'avant.

Dans l'exemple de la Figure 1, ces deux portions ont été représentées comme venues de matière entre elles. Alternativement, elles sont séparées l'une de l'autre.

En référence à la Figure 3, la lentille 10 est configurée pour mettre en forme la lumière qui lui parvient des sources 6 et du boîtier 4 de façon à générer le faisceau de sortie (illustré en Figure 2a ou 2b en fonction de la fonction mise en œuvre).

La lentille se trouve sur le trajet optique de la lumière fournie par les sources de lumière après réflexion sur les faces internes du boîtier. Par exemple, la lentille est maintenue dans une position fixe relativement au boîtier 4 par l'intermédiaire d'un bâti (non représenté).

Dans le contexte de l'invention, et comme décrit ci-après, la lentille 10 est en outre configurée pour flouter la coupure C, en particulier lors de la mise en œuvre de la fonction route.

La lentille 10 est une lentille de type sphérique. Elle est avantageusement de type convergente. En vue de face, la lentille présente une forme générale circulaire. Le diamètre de la lentille 10 (au sens de cette forme générale circulaire) est par exemple compris entre 35 mm et 85 mm.

La lentille 10 est par exemple réalisée à partir de verre. Alternativement, elle est réalisée à partir de Polyméthacrylate de méthyle (d'acronyme PMMA) ou encore de polycarbonate (d'acronyme PC).

La lentille 10 présente un axe optique sensiblement horizontal (au sens de l'orientation de la Figure 1). Cet axe optique est par exemple sensiblement à une même hauteur que l'une des arêtes de l'élément 8, par exemple son arête gauche.

La lentille est agencée en regard du boîtier 4. Avantageusement, elle est centrée par rapport au boitier 4.

La lentille 10 présente une face arrière 16 destinée à être orientée en direction du boîtier 4, et une face avant 18 destinée à faire face à une chaussée à éclairer.

La face arrière 16 forme une face d'entrée de la lumière dans la lentille 10. La face arrière est par exemple plane. Toutefois, alternativement, la face arrière présente une forme bombée, ou encore une forme quelconque.

La face avant 18 forme une face de sortie de la lumière. La face avant 18 est par exemple bombée. Alternativement, elle présente une forme quelconque. Par exemple, en variante, elle est plane.

La lentille présente un plan médian P destiné à être sensiblement vertical par rapport à la chaussée à éclairer. Ici, par plan médian, on entend un plan qui sépare la partie droite de la lentille de sa partie gauche, en particulier en vue de face de la lentille. Dans l'exemple de la Figure 3, la lentille est représentée en vue de face, le plan P étant orthogonal au plan de la Figure 3.

Optionnellement, comme illustré en Figure 3, la lentille 10 est sensiblement symétrique par rapport à ce plan P. Toutefois, on n'exclut pas que la lentille ne soit pas symétrique par rapport à ce plan.

Optionnellement, comme illustré sur la Figure 3, la lentille présente un méplat supérieur et/ou un méplat inférieur définissant chacun une surface sensiblement plane et sensiblement orthogonale au plan P. Les méplats sont par exemple prévus pour réduire l'encombrement vertical de la lentille. Par exemple, pour une lentille de diamètre valant 70 mm, les méplats sont prévus pour que la hauteur de la lentille le long du plan P soit sensiblement égale à 60 mm.

Dans le cadre de l'invention, la face avant 18 présentent des microstructures 20 adaptées pour diffuser la lumière traversant la lentille, notamment pour flouter la coupure C.

Comme illustré sur la Figure 4, par « microstructures », on entend des rugosités formées sur la surface de la face avant 18. En considérant une zone donnée de la face avant 18, ces rugosités peuvent être distribuées régulièrement, c'est-à-dire que le motif défini par les creux et les bosses est régulier au sein de la zone donnée, ou bien distribuées de manière non régulière.

Ces microstructures se présentent par exemple sous la forme de dépressions dans la surface de la face avant.

Avantageusement, les microstructures présentent une embouchure de forme sensiblement circulaire. Le rayon de cette embouchure forme un rayon maximal de la microstructure considérée. Dans le cadre de l'invention, le rayon maximal des microstructures 20 est avantageusement compris entre 0,5 mm et 1 mm.

Les microstructures 20 présentent également une profondeur donnée, détaillée ci-après.

En référence à la Figure 3, la face avant 18 présente une première zone de diffusion Z1 comportant des microstructures 20 adaptées pour diffuser la lumière issue des sources 6, et deux deuxièmes zones de diffusion Z2₁, Z2₂ comportant également des microstructures également adaptées pour diffuser la lumière issue des sources 6. Ces microstructures ont notamment vocation à flouter la coupure C.

La profondeur des microstructures 20 de la première zone de diffusion Z1 est strictement inférieure à la profondeur des microstructures 20 des deuxièmes zones de diffusion Z2₁, Z2₂.

Plus spécifiquement, la première zone Z1 s'étend sur la face avant 18 le long du plan médian P. Avantageusement, le plan P forme un plan de symétrie de la zone Z1.

La zone Z1 présente une largeur (c'est-à-dire une dimension transversalement au plan P) comprise entre 20% et 60% du diamètre de la lentille.

Au sein de la zone Z1, les microstructures présentent avantageusement toutes sensiblement la même configuration, et en particulier sensiblement la même profondeur.

La profondeur des microstructures 20 de la zone Z1 est avantageusement comprise entre1,5 µm et 4 µm.

En outre, les microstructures sont optionnellement régulièrement distribuées au sein de cette zone. Par exemple, elles y sont distribuées régulièrement de manière concentrique par rapport à un point donné. Ce point est par exemple le centre de la face avant, qui est par exemple à mi-hauteur de la face avant 18 le long du plan P. Alternativement, la distribution spatiale des microstructures 20 n'est pas concentrique. Elle est par exemple sensiblement matricielle, les microstructures étant agencées en lignes et colonnes. Ces lignes et colonnes sont par exemple orthogonales, respectivement parallèles au plan P. Alternativement encore, leur distribution au sein de la zone Z1 est irrégulière.

La zone Z1 se présente par exemple sous la forme d'une bande s'étendant selon le plan P. Cette bande présente par exemple une forme générale rectangulaire. Les bords transversaux de cette bande sont sensiblement perpendiculaires au plan P, les bords longitudinaux étant situés chacun d'un côté et de l'autre du plan P symétriquement l'un par rapport à l'autre vis-à-vis du plan P. Le bord transversal supérieur de la bande correspond par exemple à l'extrémité supérieure de la face avant 18. Le bord transverse inférieur se situe par exemple à une distance du bord transversal supérieur à la moitié de la longueur de la face avant selon le plan P.

Dans cette configuration, les zones Z2₁ et Z2₂ se situent de part et d'autre de la zone Z1.

Alternativement, la zone Z1 présente une forme générale circulaire (illustrée en pointillés sur la Figure 3).

Avantageusement, le centre de la zone Z1 est alors confondu avec le centre de concentricité des microstructures 20 lorsque ces dernières sont agencées concentriquement. Par exemple, dans l'exemple de la Figure 3, ce centre correspondsensiblement au centre de la face avant. Ceci facilite la conception de la lentille dans la mesure où il est alors aisé de s'assurer qu'aucune microstructure ne se situe sur la frontière de la zone Z1.

Dans certaines réalisations telles celle de la Figure 3, l'extrémité supérieure de la zone Z1 se situe à l'écart de l'extrémité supérieure de la face avant de la lentille le long du plan P. Dans ces réalisations, les zones Z2₁ et Z2₂ sont frontalières le long du plan P dans la région de la face avant située entre l'extrémité supérieure de la lentille et l'extrémité supérieure de la zone Z1.

Alternativement, l'extrémité supérieure de la zone Z1 se situe au niveau de l'extrémité supérieure de la face avant de la lentille. Par exemple, l'extrémité supérieure de la zone Z1 est formée par une partie de l'arête délimitée par le méplat supérieur et la face avant (par exemple par un point de cet arête, auquel cas la zone Z1 est tangentielle à l'extrémité supérieure de la face avant, ou bien par un segment de cette arête).

Dans certaines réalisations telles celles de la Figure 3, l'extrémité inférieure de la zone Z1 est formée par une corde de la forme générale de cercle, ladite corde étant orthogonale au plan P. Autrement dit, la zone Z1 présente une forme générale de cercle dont l'extrémité inférieure est tronquée.

Comme décrit plus en détail ci-après, quelle que soit la forme de la zone Z1, l'extrémité inférieure de la zone Z1 est limitrophe d'une troisième zone de diffusion.

Les deuxièmes zones Z2₁, Z2₂ s'étendent de part et d'autre du plan P. Elles s'étendent avantageusement jusqu'aux bords latéraux de la lentille 10. Leur extrémité inférieure se situe par exemple au même niveau que l'extrémité inférieure de la zone Z1 le long du plan P. Les formes respectives de ces deux zones sont par exemple symétriques l'une de l'autre par rapport au plan P.

Dans certaines réalisations telles celle de la Figure 3, les extrémités supérieures se situent par exemple au niveau de l'extrémité supérieure de la face avant, par exemple au niveau du méplat supérieur. Alternativement, en fonction de la configuration de la zone Z1, et notamment en fonction de la largeur de celle-ci lorsqu'elle est en forme de bande, cette extrémité supérieure peut se situer à l'écart du méplat.

Comme précédemment, au sein des zones Z2₁, Z2₂, les microstructures 20 présentent avantageusement sensiblement toutes la même configuration, en particulier sensiblement la même profondeur.

La profondeur des microstructures 20 des zones Z2₁, Z2₂ est avantageusement comprise entre 3 et 8 µm.

En outre, le rapport entre la profondeur des microstructures des deuxièmes zones de diffusion Z2₁, Z2₂ et la profondeur des microstructures de la première zone de diffusion Z1 est compris entre 1,5 et 3.

Par ailleurs, avantageusement, la profondeur des microstructures 20 de l'une des zones Z2₁, Z2₂ est supérieure à la profondeur des microstructures de l'autre de ces zones.

Avantageusement, la profondeur la plus importante est observée au sein de la zone Z2₁, Z2₂ située en regard de l'arête de la plieuse 8 qui se trouve sur l'axe optique de la lentille 10. Dans l'exemple des Figures dans lequel l'arête gauche de la plieuse se situe sur l'axe optique de la lentille, les microstructures 20 de la zone Z2₂ sont plus profondes que celles de la zone Z2₁.

Par exemple, dans une réalisation, la profondeur des microstructures 20 de la zone Z2₁ vaut 4,7 µm, celle des microstructures de la zone Z2₂ valant sensiblement 5,4 µm. La profondeur des microstructures de la zone Z1 vaut alors par exemple sensiblement 2,4 µm.

Comme pour la première zone de diffusion Z1, les microstructures de ces deuxièmes zones sont par exemple régulièrement distribuées au sein des zones Z2₁, Z2₂. Elles y sont agencées concentriquement, ou bien selon un agencement matriciel, ou bien encore selon tout agencement régulier.

Alternativement, elles n'y sont pas distribuées de manière régulière.

Toujours en référence à la Figure 3, la face avant 18 comprend avantageusement en outre une troisième zone de diffusion Z3 s'étend transversalement au plan médian. Par exemple, elle s'étend depuis un bord latéral de la lentille jusqu'au bord latéral opposé. Avantageusement, la forme de la zone Z3 est sensiblement symétrique par rapport au plan P.

La zone de diffusion Z3 présente des microstructures 20 adaptées pour diffuser la lumière qui la traverse. Avantageusement, la profondeur des microstructures de la zone Z3 est analogue à celle de la zone Z1. En outre, leur agencement est avantageusement identique à celui de la zone Z1.

La zone Z3 est adjacente à la zone Z1 et aux zones Z2₁, Z2₂. Elle s'étend depuis l'extrémité inférieure de ces zones en direction de l'extrémité inférieure de la lentille. Son extrémité supérieure est frontalière des extrémités inférieures respectives des zones Z1, Z2₁, Z2₂. Par exemple, cette extrémité supérieure s'étend d'un côté à l'autre de la face avant sensiblement orthogonalement au plan P.

La zone Z3 forme, conjointement à la zone Z1, une région de diffusion connexe de la face avant. Autrement dit, la région formée par ces zones est une région continue au sein de laquelle les propriétés des microstructures sont avantageusement sensiblement constantes.

Optionnellement, la face avant 18 présente en outre, au niveau de son extrémité inférieure, une région 22 conformée pour dévier la lumière qui lui parvient pour l'éclairage de points de portique.

De manière connue, ces points de portique correspondent à des éléments, tels que des panneaux de signalisation, qui se trouvent situés à un point plus haut que le faisceau formé par le dispositif 2, et ce aussi bien en fonction route qu'en fonction code. Cette région 22 est ainsi configurée pour la déviation d'une petite partie de la lumière pour l'éclairement de ces points hauts, par exemple dans des directions prescrites par des réglementations.

Cette région 22 est par exemple adjacente à la zone Z3, et s'étend entre l'extrémité inférieure de cette dernière et le bord inférieur de la lentille (optionnellement délimité par le méplat inférieur).

Avantageusement, les zones Z1, Z2₁, Z2₂, Z3 et 22 occupent conjointement sensiblement l'intégralité de la face avant.

Le procédé de fonctionnement du dispositif 2 va maintenant être décrit en référence aux Figures.

Lors de l'alimentation en énergie électrique des sources 6, par exemple à partir de l'énergie électrique fournie par une source d'alimentation du dispositif 2 (non représentée), ces sources émettent de la lumière en direction de la face interne de la partie correspondante du boîtier 4. Cette lumière y est réfléchie en direction de la lentille 10, qui met en forme cette lumière. En particulier, celle-ci image les arêtes de la plieuse 8, ce qui se traduit par la présence de la coupure C au sein du faisceau lumineux généré.

En fonction code, seule la source 6₁ est alimentée, de sorte que le faisceau résultant correspond à celui illustré en Figure 2a (les éventuelles zones éclairées pour les points de portique du fait de la présence de la région 22 n'étant pas représentés).

En fonction route, les sources 6₁ et 6₂ sont toutes deux alimentées, le faisceau résultant étant illustré en Figure 2b.

Du fait de la présence des zones de diffusion Z1, Z2₁, Z2₂, Z3, et en particulier de la profondeur sélective des microstructures de ces zones, en fonction route, la coupure C apparaît plus foutée que pour les dispositifs connus.

En particulier, le flou de la coupure C est supérieur à l'écart de l'axe que dans l'axe, par exemple pour des positions latérales écartées de plus de 5° à gauche et à droite de l'axe (les deux positions à 5° de part et d'autre de l'axe étant classiquement appelées 5°L et 5°R, (L pour gauche, R pour droite).

En pratique, la présence des zones Z2₁ et Z2₂ sur les côtés de la face avant de la lentille tend à réduire le gradient de lumière dans les zones latérales de la coupure issue de la source de lumière spécifiquement associée à la fonction route.

Par exemple, en fonction code, le gradient de la coupure est compris entre 0,15 et 0,40 pour des positions situées à moins de 10° d'un côté et de l'autre de l'axe (c'est-à-dire pour les positions comprises entre 10°L et 10°R).

Pour ces mêmes positions, le gradient de la coupure dans la fonction route est compris entre 0,03 et 0,15.

Dans les dispositifs connus, les gradients sont sensiblement identiques dans les deux fonctions route et code.

Un procédé de fabrication d'une lentille 10 selon l'invention va maintenant être décrit.

La lentille 10 est avantageusement fabriquée par moulage au moyen d'un moule. Le moule présente une face interne destinée à former la face avant de la lentille. Cette face interne du moule présente des microstructures de configuration complémentaire de celle des microstructures que la face avant de la lentille est destinée à présenter.

Les microstructures du moule sont par exemple formées de manière connue. Par exemple, pour une distribution irrégulière des microstructures, elles sont formées par sablage, ou encore par érosion électrochimique. Pour une distribution régulière des microstructures, les microstructures du moule sont par exemple formées par usinage du moule à haute vitesse.

En pratique, dans la face de ce moule, on aménage les microstructures de façon à définir des zones complémentaires des zones Z1 à Z3 et de la région 22, et qui conforment le matériau de la lentille ou un précurseur de celui-ci de façon à définir ces zones.

Une fois la lentille démoulée, celle-ci est par exemple soumise à d'éventuels traitements optionnels connus.

La lentille selon l'invention présente plusieurs avantages.

En effet, elle permet de réduire le risque que la présence de la coupure C est susceptible d'engendrer pour le conducteur en particulier en fonction route, et notamment de réduire la gêne produite par cette coupure au niveau des extrémités latérales du faisceau généré, qui sont les plus susceptibles de poser problème.

En outre, ce résultat est obtenu de manière simple en ce qu'il n'impose pas de modifications profondes du dispositif d'éclairage, notamment de sa configuration géométrique.

Dans la description ci-dessus, le dispositif 2 a été décrit comme comprenant un boîtier 4 présentant des surfaces réfléchissantes configurées pour réfléchir la lumière émise par les sources en direction de la lentille 10.

Dans une configuration alternative, le dispositif 2 est dépourvu de boîtier 4 dont les faces internes sont réfléchissantes.

Le dispositif 2 comprend alors un support sur lequel les sources 6 sont agencées. Le support est par exemple agencé derrière l'élément 8 et orthogonalement à l'axe optique de la lentille. Les sources 6₁ et 6₂ sont agencées au-dessus et en dessous de l'axe optique.

Le dispositif comprend en outre, pour chaque source, un élément optique de mise en forme agencé en regard de la source correspondant et configuré pour focaliser la lumière émise par la source correspondant sur la plieuse de l'élément 8.

La configuration relative de la plieuse et de la lentille est par exemple inchangée.

## Revendications

1. Lentille pour dispositif d'éclairage de véhicule automobile, la lentille comprenant une face arrière (16) destinée à être orientée en direction d'une source de lumière (6) du dispositif d'éclairage, et une face avant (18) destinée à être orientée vers une chaussée à éclairer, la lentille (10) présentant un plan médian vertical (P) destiné à être sensiblement orthogonal à la chaussée, la face avant présentant une première zone de diffusion (Z1) présentant des microstructures (20) adaptées pour diffuser la lumière émise par la source de lumière, la première zone de diffusion (Z1) s'étendant selon le plan médian (P), la face avant comprenant en outre au moins deux deuxièmes zones de diffusion (Z2₁, Z2₂) présentant chacune des microstructures (20) adaptées pour diffuser la lumière émise par la source de lumière, les deux deuxièmes zones de diffusion se situant de part et d'autre du plan médian vertical, la lentille étant **caractérisée en ce que** les microstructures des deuxièmes zones de diffusion (Z2₁, Z2₂) présentent une profondeur strictement supérieure à la profondeur des microstructures (20) de la première zone de diffusion (Z1).

2. Lentille selon la revendication 1, dans laquelle le rapport entre la profondeur des microstructures des deuxièmes zones de diffusion (Z2₁, Z2₂) et la profondeur des microstructures de la première zone de diffusion (Z1) est compris entre 1,5 et 3.

3. Lentille selon la revendication 1 ou 2, dans laquelle la profondeur des microstructures de la première zone de diffusion (Z1) est comprise entre 1,5 µm et 4 µm.

4. Lentille selon l'une quelconque des revendications précédentes, dans laquelle la profondeur des microstructures des deuxièmes zones de diffusion (Z2₁, Z2₂) est comprise entre 3 µm et 8 µm.

5. Lentille selon l'une quelconque des revendications précédentes, dans laquelle la profondeur des microstructures d'une deuxième zone de diffusion est strictement supérieure à la profondeur des microstructures de l'autre deuxième zone de diffusion.

6. Lentille selon l'une quelconque des revendications précédentes, dans laquelle, au sein d'une zone de diffusion donnée, les microstructures présentent toutes sensiblement la même profondeur.

7. Lentille selon l'une quelconque des revendications précédentes, dans laquelle les microstructures présentent un rayon maximal compris entre 0,5 mm et 1 mm.

8. Lentille selon l'une quelconque des revendications précédentes, dans laquelle la première zone de diffusion (Z1) présente une forme générale de bande s'étendant selon le plan médian vertical.

9. Lentille selon l'une quelconque des revendications 1 à 7, dans laquelle la première zone de diffusion présente une forme générale circulaire.

10. Lentille selon l'une quelconque des revendications précédentes, dans laquelle la première zone de diffusion présente une largeur comprise entre 20% et 60% d'un diamètre de la lentille.

11. Lentille selon l'une quelconque des revendications précédentes, dans laquelle la face avant comprend une troisième zone de diffusion (Z3) s'étendant sensiblement orthogonalement au plan médian (P), la troisième zone de diffusion s'étendant à partir d'une extrémité inférieure des première et deuxièmes zones de diffusion en direction d'une extrémité de la face avant (18) de la lentille.

12. Lentille selon la revendication 11, dans laquelle la troisième zone de diffusion (Z3) présente des microstructures (20) adaptées pour diffuser la lumière émise par la source de lumière, les microstructures de la troisième zone présentant une profondeur sensiblement identique à la profondeur des microstructures de la première zone de diffusion (Z1).

13. Lentille selon la revendication 11 ou 12, dans laquelle la première et la troisième zones de diffusion (Z1, Z3) définissent conjointement sur la face avant (18) de la lentille une région de diffusion connexe.

14. Lentille selon l'une quelconque des revendications précédentes, dans laquelle la face avant présente, au niveau d'une extrémité inférieure, une région (22) conformée pour dévier une partie de la lumière issue de la source de lumière pour l'éclairage de points de portique.

15. Dispositif d'éclairage, notamment de véhicule automobile, **caractérisé en ce qu'**il comprend au moins une source de lumière (6) configurée pour émettre de la lumière et une lentille (10) selon l'une quelconque des revendications précédentes agencée pour recevoir au moins une partie de la lumière émise par la source de lumière (6).

16. Dispositif d'éclairage selon la revendication 15, comprenant une première source de lumière (61) associée à une fonction de feu de croisement du dispositif d'éclairage, une deuxième source de lumière (62) associée à une fonction de feu de route du dispositif d'éclairage, et un élément de coupure (8) adapté pour générer une ligne de coupure (C) au sein d'un faisceau lumineux émis par le dispositif d'éclairage.

## Patentansprüche

1. Linse für eine Beleuchtungsvorrichtung eines Kraftfahrzeugs, wobei die Linse eine rückseitige Fläche (16), die dazu ausgelegt ist, in Richtung einer Lichtquelle (6) der Beleuchtungsvorrichtung ausgerichtet zu sein, und eine vorderseitige Fläche (18) umfasst, die dazu ausgelegt ist, zu einer zu beleuchtenden Fahrbahn hin ausgerichtet zu sein, wobei die Linse (10) eine senkrechte Mittelebene (P) aufweist, die dazu ausgelegt ist, im Wesentlichen orthogonal zur Fahrbahn zu verlaufen, wobei die vorderseitige Fläche eine erste Streuzone (Z1) aufweist, die Mikrostrukturen (20) aufweist, die dazu eingerichtet sind, das von der Lichtquelle emittierte Licht zu streuen, wobei die erste Streuzone (Z1) sich entlang der Mittelebene (P) erstreckt, wobei die vorderseitige Fläche außerdem mindestens zwei zweite Streuzonen (Z2₁, Z2₂) umfasst, die jeweils Mikrostrukturen (20) aufweisen, die dazu eingerichtet sind, das von der Lichtquelle emittierte Licht zu streuen, wobei die zwei zweiten Streuzonen sich beiderseits der senkrechten Mittelebene befinden, wobei die Linse **dadurch gekennzeichnet ist, dass** die Mikrostrukturen der zweiten Streuzonen (Z2₁, Z2₂) eine Tiefe aufweisen, die unbedingt größer ist als die Tiefe der Mikrostrukturen (20) der ersten Streuzone (Z1).

2. Linse nach Anspruch 1, wobei das Verhältnis zwischen der Tiefe der Mikrostrukturen der zweiten Streuzonen (Z2₁, Z2₂) und der Tiefe der Mikrostrukturen der ersten Streuzone (Z1) zwischen 1,5 und 3 liegt.

3. Linse nach Anspruch 1 oder 2, wobei die Tiefe der Mikrostrukturen der ersten Streuzone (Z1) zwischen 1,5 µm und 4 µm liegt.

4. Linse nach einem der vorhergehenden Ansprüche, wobei die Tiefe der Mikrostrukturen der zweiten Streuzonen (Z2₁, Z2₂) zwischen 3 µm und 8 µm liegt.

5. Linse nach einem der vorhergehenden Ansprüche, wobei die Tiefe der Mikrostrukturen einer zweiten Streuzone unbedingt größer ist als die Tiefe der Mikrostrukturen der anderen zweiten Streuzone.

6. Linse nach einem der vorhergehenden Ansprüche, wobei innerhalb einer bestimmten Streuzone die Tiefe der Mikrostrukturen alle im Wesentlichen die gleiche Tiefe aufweisen.

7. Linse nach einem der vorhergehenden Ansprüche, wobei die Mikrostrukturen einen maximalen Radius zwischen 0,5 mm und 1 mm aufweisen.

8. Linse nach einem der vorhergehenden Ansprüche, wobei die erste Streuzone (Z1) allgemein eine Form eines Bandes aufweist, das sich entlang der senkrechten Mittelebene erstreckt.

9. Linse nach einem der vorhergehenden Ansprüche 1 bis 7, wobei die erste Streuzone allgemein eine kreisförmige Form aufweist.

10. Linse nach einem der vorhergehenden Ansprüche, wobei die erste Streuzone eine Breite zwischen 20 % und 60 % eines Linsendurchmessers aufweist.

11. Linse nach einem der vorhergehenden Ansprüche, wobei die vorderseitige Fläche eine dritte Streuzone (Z3) aufweist, die sich im Wesentlichen orthogonal zur Mittelebene (P) erstreckt, wobei die dritte Streuzone sich von einem unteren Ende der ersten und der zweiten Streuzone in Richtung eines Endes der vorderen Fläche (18) der Linse erstreckt.

12. Linse nach Anspruch 11, wobei die dritte Streuzone (Z3) Mikrostrukturen (20) aufweist, die dazu eingerichtet sind, das von der Lichtquelle emittierte Licht zu streuen, wobei die Mikrostrukturen der dritten Zone eine Tiefe aufweisen, die im Wesentlich identisch ist mit der Tiefe der Mikrostrukturen der ersten Streuzone (Z1).

13. Linse nach Anspruch 11 oder 12, wobei die erste und die dritte Streuzone (Z1, Z3) gemeinsam einen zusammenhängenden Streubereich auf der vorderseitige Fläche (18) der Linse definieren.

14. Linse nach einem der vorhergehenden Ansprüche, wobei die vorderseitige Fläche an einem unteren Ende einen Bereich (22) aufweist, der dazu geformt ist, einen Teil des von der Lichtquelle ausgegebenen Lichts für die Beleuchtung von Signalbrücken abzulenken.

15. Beleuchtungsvorrichtung, insbesondere eines Kraftfahrzeugs, **dadurch gekennzeichnet, dass** es mindestens eine Lichtquelle (6), die dazu konfiguriert ist, Licht zu emittieren, und eine Linse (10) nach einem der vorhergehenden Ansprüche umfasst, die dazu ausgebildet ist, mindestens einen Teil des von der Lichtquelle emittierten Lichts (6) zu empfangen.

16. Beleuchtungsvorrichtung nach Anspruch 15, die eine erste Lichtquelle (61), die einer Abblendlichtfunktion der Beleuchtungsvorrichtung zugeordnet ist, eine zweite Lichtquelle (62), die einer Fernlichtfunktion der Beleuchtungsvorrichtung zugeordnet ist, und ein Hell-Dunkel-Element (8) umfasst, das dazu eingerichtet ist, eine Hell-Dunkel-Grenze (C) innerhalb des von der Beleuchtungsvorrichtung emittierten Lichtstrahls zu erzeugen.

## Claims

1. Lens for a lighting device of a motor vehicle, the lens comprising a rear face (16) designed to be oriented toward a light source (6) of the lighting device, and a front face (18) designed to be oriented toward the roadway being illuminated, the lens (10) having a median vertical plane (P) designed to be substantially orthogonal to the roadway, the front face having a first zone of diffusion (Z1) with microstructures (20) adapted to diffuse the light emitted by the light source, the first zone of diffusion (Z1) extending in the median vertical plane (P), the front face furthermore comprising at least two second zones of diffusion (Z2₁, Z2₂) each one having microstructures (20) adapted to diffuse the light emitted by the light source, the two second zones of diffusion being situated on either side of the median vertical plane, the lens being **characterized in that** the microstructures of the two zones of diffusion (Z2₁, Z2₂) have a depth absolutely greater than the depth of the microstructures (20) of the first zone of diffusion (Z1).

2. Lens according to claim 1, wherein the ratio between the depth of the microstructures of the two zones of diffusion (Z2₁, Z2₂) and the depth of the microstructures of the first zone of diffusion (Z1) is between 1.5 and 3.

3. Lens according to claim 1 or 2, wherein the depth of the microstructures of the first zone of diffusion (Z1) is between 1.5 µm and 4 µm.

4. Lens according to any one of the preceding claims, wherein the depth of the microstructures of the second zones of diffusion (Z2₁, Z2₂) is between 3 µm and 8 µm.

5. Lens according to any one of the preceding claims, wherein the depth of the microstructures of one second zone of diffusion is absolutely greater than the depth of the microstructures of the other second zone of diffusion.

6. Lens according to any one of the preceding claims, wherein within a given zone of diffusion the microstructures all have substantially the same depth.

7. Lens according to any one of the preceding claims, wherein the microstructures have a maximum radius between 0.5 mm and 1 mm.

8. Lens according to any one of the preceding claims, wherein the first zone of diffusion (Z1) has the general shape of a band extending in the median vertical plane.

9. Lens according to any one of claims 1-7, wherein the first zone of diffusion has a general circular shape.

10. Lens according to any one of the preceding claims, wherein the first zone of diffusion has a width between 20% and 60% of a diameter of the lens.

11. Lens according to any one of the preceding claims, wherein the front face comprises a third zone of diffusion (Z3) extending substantially orthogonally to the median plane (P), the third zone of diffusion extending from one lower end of the first and second zones of diffusion toward an end of the front face (18) of the lens.

12. Lens according to claim 11, wherein the third zone of diffusion (Z3) has microstructures (20) adapted to diffuse the light emitted by the light source, the microstructures of the third zone having a depth substantially identical to the depth of the microstructures of the first zone of diffusion (Z1).

13. Lens according to claim 11 or 12, wherein the first and the third zones of diffusion (Z1, Z3) jointly define a connected region of diffusion on the front face (18) of the lens.

14. Lens according to any one of the preceding claims, wherein the front face has, at the level of one lower end, a region (22) formed to divert a portion of the light coming from the light source to illuminate elevated signage.

15. Lighting device, especially for a motor vehicle, **characterized in that** it comprises at least one light source (6) designed to emit light and a lens (10) according to any one of the preceding claims, disposed to receive at least a portion of the light emitted by the light source (6).

16. Lighting device according to claim 15, comprising a first light source (6₁) associated with a low beam function of the lighting device, a second light source (6₂) associated with a high beam function of the lighting device, and a cutoff element (8) adapted to generate a cutoff line (C) within a light beam emitted by the lighting device.
